# EUROPEAN PATENT APPLICATION

(11) **EP 2 177 372 A2**
(43) Date of publication of application: **21.04.2010**
(21) Application number: 08170046.0
(22) Date of filing: 27.11.2008
(51) Int. Cl.: B44C 5/04

(54) **Laminate surface layer without an overlay and method of manufacture**

(30) Priority: 02.10.2008 US 244154
(71) Applicant: Gottzmann, Andreas M., Agawam, MA 01001 (US); Ross, Michael, Agawam, MA 01001 (US); Shaw, Aaron D., Agawam, MA 01001 (US)
(72) Inventor: Gottzmann, Andreas M., Agawam, MA 01001 (US); Ross, Michael, Agawam, MA 01001 (US); Shaw, Aaron D., Agawam, MA 01001 (US)
(74) Representative: Elzaburu Marquez, Alberto

(57) **Abstract**

A process for the production of a decorative laminate comprising a décor layer (10) formed from a décor sheet (26) comprising a paper sheet impregnated with a thermoset resin and coated with a slurry comprising a thermoset resin (12) and a mix of abrasion resistant particles (14), wherein the mix of abrasion resistant particles comprises elliptical, platelet shaped particles. After the décor sheet (26) is dried, it may be bonded to a core layer, and may serve as an outermost surface layer of the laminate. The decorative laminate is an improvement over the prior art in that it does not need an overlay layer to reduce scratching, scuffing, and marring, thereby, improving the clarity of the laminate.

## Description

### CROSS REFERENCE TO RELATED APPLICATIONS

This application claims the benefit of U.S. Provisional Application No. 60/976,870 filed on October 2, 2007.

### BACKGROUND OF THE INVENTION

### 1. Field of the Invention.

The present invention relates to laminates. More particularly, the invention relates to high pressure laminates ("HPLs") and low pressure laminates ("LPLs") comprising a décor surface layer characterized by superior clarity, and improved abrasion resistance, scratch resistance, scuff resistance, and mar resistance, and to a novel process for forming the inventive laminates.

### 2. Background.

LPLs and HPLs are well known and used as covering materials for walls, cabinet liners, desktops, tabletops, for other furniture, and for flooring. LPLs are often made from a single paper décor sheet pressed onto a core layer. The décor sheet is often impregnated with a melamine formaldehyde or urea formaldehyde resin, and the core layer often consists of medium or high-density particleboard. However, typically such LPLs have very low abrasion/wear resistance as there is nothing on the surface layer of the LPL to protect the ink on the décor sheet from wearing off when exposed to wear conditions.

HPLs, on the other hand, are often made of two or more paper sheets impregnated with a phenol formaldehyde resin, a décor paper sheet impregnated with a melamine formaldehyde resin, and an overlay sheet comprising an alpha-cellulose substrate impregnated with a melamine formaldehyde resin. The overlay sheet of the HPL product serves to protect the décor sheet from abrasion. Accordingly, the overlay sheet of the HPL offers a level of protection not found in LPLs.

A conventional process of forming the overlay sheet comprises impregnating a continuous paper or a paper sheet with a thermosetting resin. At least one side of the continuous paper or paper sheet is then coated with a slurry containing aluminum oxide and a thermosetting resin. Thereafter, the slurry and the resin are dried, after which the particle coated, impregnated paper, the so-called prepreg, is cut into sheets. To form the HPL, at least one such prepreg sheet is placed as a surface layer on a core layer and bonded thereto.

The overlay formed by this process, however, though an improvement over overlays formed in other conventional fashions, still lacks an optimum degree of clarity and abrasion-, scuff-, and mar-resistance. Accordingly, what is needed is a laminate surface layer that can be formed on both HPLs and LPLs to achieve a desired degree of clarity and with improved abrasion and wear resistance.

### SUMMARY OF THE INVENTION

The above-described deficiencies of the prior art are overcome by a décor layer formed by impregnating a décor sheet with a thermosetting resin composition and coating the impregnated décor sheet with a slurry comprising a thermoset resin composition and a mix of abrasion resistant particles, wherein the mix of abrasion resistant particles comprises a percentage of elliptical, platelet-like shaped abrasion resistant particles, wherein the percentage is based on a desired clarity. The décor layer may be laminated to a core layer to form a laminate having superior properties of clarity, scratch resistance, mar resistance, and abrasion resistance.

When the décor layer formed by the process disclosed herein is used to form a LPL, the resulting LPL has increased abrasion/wear resistance where previously there was very little. When the décor layer is used to form a HPL, the resulting laminate obviates the need for an overlay layer, and, therefore, improves the overall clarity exhibited by the laminate. Clarity is a highly desirable characteristic because it allows the color and/or the pattern of the décor sheet to show through clearly.

### BRIEF DESCRIPTION OF THE DRAWINGS

Figure 1 is a schematic depicting an exemplary process for forming a décor layer;
Figure 2 is a schematic depicting an exemplary décor layer formed from the process depicted in Figure 1;
Figure 3 is a schematic depicting an exemplary process for forming a décor layer;
Figures 4-7 are schematics depicting exemplary décor layers formed from the process depicted in Figure 3;
Figure 8 is a schematic depicting an exemplary process for forming a laminate;
Figure 9 is a photograph of prior art abrasion resistant particles; and
Figure 10 is a photograph of an exemplary elliptical, platelet-shaped abrasion resistant particle;
Figure 11 is a schematic depicting a exemplary laminate formed from the process depicted in Figure 8; and
Figure 12 is a schematic depicting an exemplary process for applying a slurry to a décor sheet.

### DETAILED DESCRIPTION OF THE INVENTION

Disclosed herein is a novel process for the formation of a décor layer for a laminate, wherein the décor layer imparts improved characteristics onto the laminate over prior art laminates, wherein such improvements include, without limitation, improved clarity, and improved abrasion resistance, scuff resistance, and mar resistance. The décor layer comprises a décor sheet impregnated with a thermoset resin composition and coated with a slurry as will be discussed in greater detail below. Such a décor layer is ideally used in the formation of HPLs and LPS, wherein such laminates comprise a core layer, wherein the core layer may comprise any conventionally used core layer material, such as, for example, particleboard or fiberboard.

The novel process of the present inventive method includes forming a décor layer, wherein such process comprises impregnating a décor sheet with a thermoset resin composition, and then coating the impregnated décor sheet with a slurry. The resulting décor layer is then cured and dried. The process may further comprise applying at least one or more additional thermoset resin layers to the cured décor layer.

The décor sheet used to form the décor layer may comprise décor sheets conventionally used in the laminate arts. Accordingly, in an exemplary embodiment, the décor sheet may comprise monochromatic or patterned sheets of paper.

The thermoset resin composition used to impregnate the décor sheet may comprise one or more of a wide variety of thermoset resins, wherein one or more of such thermoset resins may be those which are conventional in the laminate industry, and which may comprise, for example, at least one of phenol-melamine, melamine-formaldehyde, phenol-urea-formaldehyde-melamine, polyester-melamine, urea-formaldehyde, polyurethane, epoxy-melamine, and the like. Accordingly, the thermoset resin composition may include low pressure thermoset resin formulations and high pressure thermoset resin formulations depending on whether LPLs or HPLs are desired. In general, high pressure formulations have a low mole ratio and low pressure formulations have a high mole ratio, wherein the mole ratio may vary widely and constitutes the proportion between the concentration of the cross linking agent, for e.g., the formaldehyde, and the concentration of the thermoset agent, e.g., the melamine, in the thermoset resin, wherein the mole ratio is selected to confer certain desired characteristics onto the laminate.

Additionally, the thermoset resin composition may comprise certain additives to increase preferable properties. For example, the additives may comprise at least one of plasticizers which control the flexibility of the décor layer, saturation agents which promote clarity, catalysts which control flexibility and aid in the curing of the décor layer, release agents which assist in production, antiblock agents which reduce blocking or sticking, and anti-mar and scuff additives which reduce friction on the surface of the décor layer. The additives may be added at various points in the process disclosed herein.

The slurry, which is coated on the impregnated décor sheet, comprises a thermoset resin composition and abrasion resistant particles. The thermoset resin composition in the slurry may comprise those thermoset resins described above, wherein the thermoset resin composition that impregnates the décor sheet may comprise a composition that is identical to or different from the thermoset resin composition in the slurry with regards to both the specific agents used in the composition and the quantities of agents used in the composition. Other additives, such as cellulose and/or glass beads may be added to the slurry to further protect the press plates from wear.

In addition to the thermoset resin composition, the slurry comprises a mixture of abrasion resistant particles. The abrasion resistant particles can comprise many different materials, wherein exemplary materials include, for example, at least one of silica, aluminum oxide, and silicon carbide. The size of the abrasion resistant particles is important for the final result. If the abrasion resistant particles are too big, the surface of the décor layer will be rough and unpleasant. On the other hand, too small particles can give too low abrasion resistance. Accordingly, in an exemplary embodiment, the abrasion resistant particles have particle sizes ranging from about 1 micrometer to about 100 micrometers.

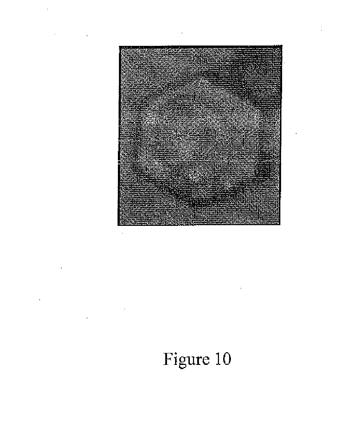

In addition to the importance of size, the geometrical shape of the abrasion resistant particles is also critical to achieving clarity and mar-, scruff-, and abrasion resistance in the final laminate. To achieve this end, it is important that a certain percentage of abrasion resistant particles used to coat the impregnated décor sheet have an elliptical, platelet like shape, such as that, for example, depicted in Figure 10. In an exemplary embodiment, the décor sheet is coated with a slurry having at least about 5 percent of elliptical-shaped abrasion resistant particles, wherein the percentage is based on the total number of abrasion resistant particles contained in the slurry which coats the décor sheet. Additionally, an exemplary slurry comprises about 1% to about 50% abrasion resistant particles by total weight and about 50% to about 99% thermoset resin/additive(s) by total weight.

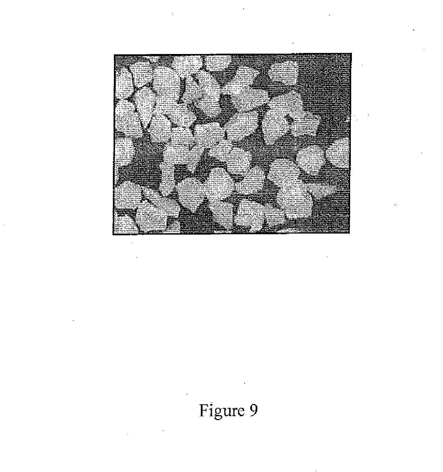

When used in conventionally formed overlays, the abrasion resistant particles are jagged, crystalline and spherical in shape (see, for example, Figure 9). When pressed, the jagged, spherical shapes leave high points on the surface of the laminate. However, the elliptical, relatively flat, platelet shaped abrasion resistant particles of the present invention, when applied directly to the impregnated décor sheet according to the method discussed below, produce a smoother, flatter surface when pressed. This smooth surface increases the scratch- and mar- resistance of the surface layer, i.e., the décor layer, of the laminate. This is because the platelet shape of the abrasion resistant particles is optically superior to conventionally used spherical-shaped abrasion resistant particles, which are depicted in Figure 9. In an exemplary embodiment, the elliptically-shaped abrasion resistant particles, such as are depicted in Figure 10, used to form the décor layer of the present invention have an aspect ratio of about 5:1, meaning that the elliptically-shaped particles are wide but thin. This aspect ratio has been found to be ideal over the aspect ratio of conventionally used abrasion resistant particles as it provides for superior clarity in the resulting laminate.

In addition to providing superior clarity, the geometrical shape of the abrasion resistant particles can also have an impact on press plate life. The standard spherical particles used in conventional overlays have more potential to cause premature press plate wear when the overlay is pressed as the abrasion resistant particles can act like sandpaper. The abrasion resistant particles in the décor layer of the present invention, however, because they are relatively small, i.e., within the range of about 1 micrometer to about 100 micrometers, and are platelet shaped, have less potential to cause premature plate wear.

Despite the benefits of having platelet shaped abrasion resistant particles, if additional wear resistance is desired, in addition to the relatively flat, elliptical, platelet shaped abrasion resistant particles discussed above, the slurry may further comprise crystalline-shaped abrasion resistant particles, wherein it is contemplated that an unlimited matrix of combinations of shapes, sizes and concentrations of abrasion resistant particles may be used to obtain the desired characteristics in the final product. However, in an exemplary embodiment, and as stated above, it is contemplated that the slurry comprises at least about 5 percent of platelet shaped abrasion resistant particles, wherein the percentage is based on the total number of abrasion resistant particles contained in the slurry.

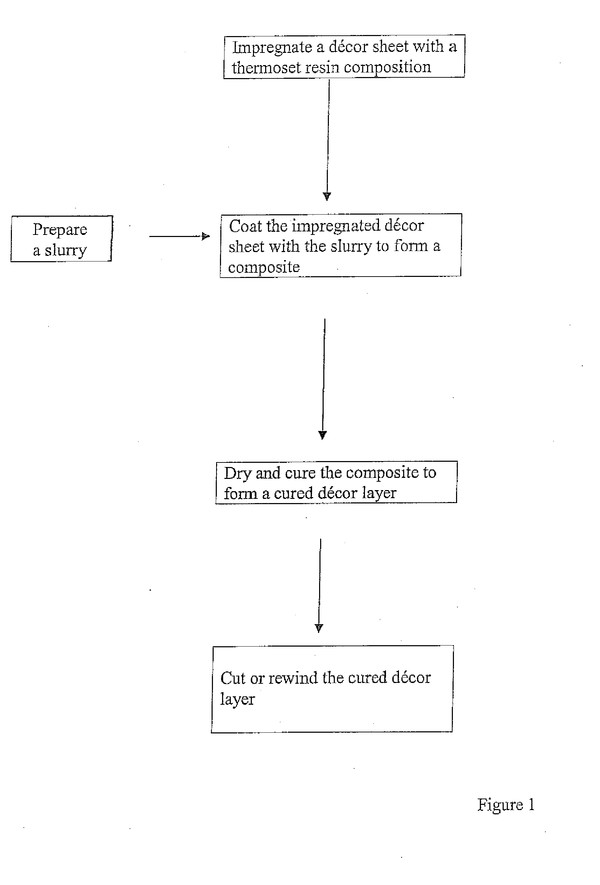

Exemplary processes used to form the inventive décor layers and laminates of the present invention is discussed with reference to Figures 1, 3, and 8. Referring to Figure 1, an exemplary process for forming the décor layer comprises preparing a slurry having an abrasion resistant particle concentration of about 1 percent to about 50 percent, based on the total concentration of the slurry, wherein at least about 5 percent of the abrasion resistant particles comprise an elliptical, platelet-like configuration, wherein the percentage is based on the total number of abrasion resistant particles contained in the slurry. The process further comprises impregnating a décor sheet with a thermoset resin composition, such that the décor sheet comprises a coating having about 5 grams per square meter ("gsm") to about 250 gsm of the thermoset resin composition. The slurry is then applied to the impregnated décor sheet while the impregnated décor sheet is still wet from the impregnation of the thermoset resin composition such that the décor sheet comprises a coating of about 5 gsm to about 250 gsm of the slurry. In a preferred embodiment, the décor sheet comprises a decorative paper having a basis weight of about 10 gsm to about 100 gsm.

The way in which the slurry is applied to the impregnated décor sheet may be varied. However, in an exemplary embodiment, the method may comprise spraying the slurry to the impregnated décor layer under pressure, as is customarily done in a fountain ARP system, and/or using a receptacle containing the slurry and a rotating doctor-roll with an uneven surface placed within or above the receptacle, as is customarily done in a Gravure system. In the Gravure system, the impregnated décor layer passes through or within the receptacle and the slurry is distributed evenly on the impregnated décor layer which is continuously fed through the doctor-roll.

The invention also relates to a process for the production of a decorative thermosetting resin with an abrasion-resistant surface layer where a special method of applying the particles to the paper is used. The method may comprise spraying under pressure the slurry to the paper or using a receptacle containing the slurry of small hard particles and a rotating doctor-roll with uneven surface placed within or above the receptacle. The paper passes through or within the receptacle and particles are distributed evenly on a paper web continuously fed through the doctor-roll. The paper web is impregnated with a thermosetting resin which has not been dried before the application of the particles. Particles may be applied by one of the following systems or by a combination of features of both systems.

More particularly, in the fountain ARP system, a fountain continuously sprays the slurry and utilizing an adjacent set of smooth, rotating rolls. The impregnated décor layer comes in contact with the slurry as it is sprayed out of the fountain. The impregnated décor layer then passes through the smooth rotating rolls where excess slurry is metered away.

The Gravure system utilizes a rotating roll which is engraved with open cells. The rotating roll has the slurry which is continuously pumped into the cells. As the décor layer passes under the rotating roll, the slurry is deposited onto the impregnated décor layer.

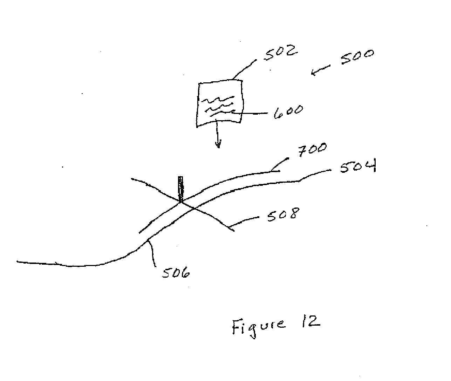

A combination of the two systems, namely a device utilizing a fountain, rolls and open cells is contemplated by this disclosure. The device may also comprise a scraper plate intended to give an even feeding of the slurry along the surface of the doctor-roll. An exemplary embodiment of this application is depicted in Figure 12. Referring to Figure 12, a device 500 comprises a container 502 which holds a slurry 600, wherein, as discussed above, slurry 600 comprises a mix of abrasion resistant particles and a thermoset resin. Device 500 further comprises a rotating roll 504 which continuously feeds a décor paper sheet 700 therethrough. Rotating roll 504 is characterized by an uneven surface 506, wherein container 502 is suspended over uneven surface 506. Device 500 further comprises a scraper plate 508 which runs across a length of décor paper sheet 700. In application, as slurry 600 is poured out of container 502, it drops onto décor paper sheet 700 as décor paper sheet 700 is being fed through rotating roll 504. Scraper plate 508 is configured to evenly distribute slurry 600 onto décor paper sheet 700 as décor paper sheet 700 passes through rotating roll 504.

Other devices can be used for application of the slurry to the wet substrate. For instance, electrostatic coating can be used, as well as, for example, reverse roll technology. It is also possible to charge the abrasion resistant particles by means of friction and then apply the slurry to the thermoset resin layer on the wet impregnated décor layer. This charge can be brought about, for example, by rubbing the particles against a Teflon surface.

Once the décor layer, comprising the thermoset resin-impregnated décor sheet coated with the slurry, is formed, the resulting décor layer is dried and cured. After cure, the concentration of the abrasion resistant particles on the décor layer comprises about 0.1 gsm to about 50 gsm. After dry and cure, the cured décor layer may be cut for use as a surface layer in the formation of a laminate.

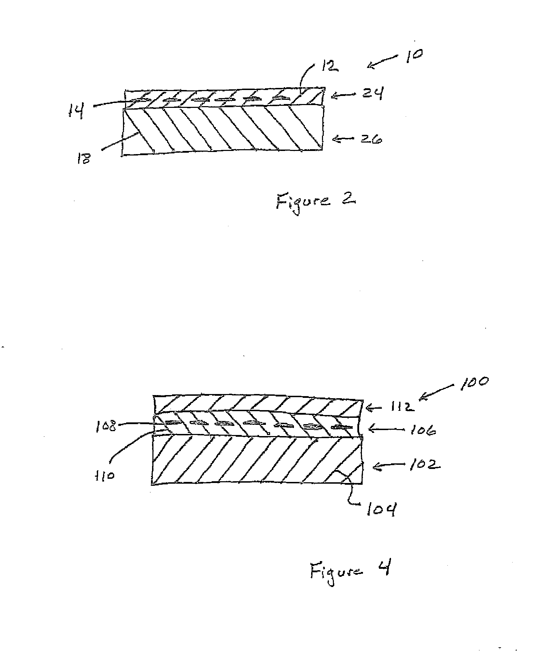

Referring to Figure 2, a décor layer 10 may be formed from the process disclosed in Figure 1. Décor layer 10 comprises a slurry coating 24 and a décor sheet 26. Slurry coating 24 comprises a thermoset resin composition 12 and a mixture of abrasion resistant particles 14. Additionally, décor sheet 26 is impregnated with a thermoset resin composition 18, wherein thermoset resin composition 18 and thermoset resin composition 12 may be identical to or different from each other.

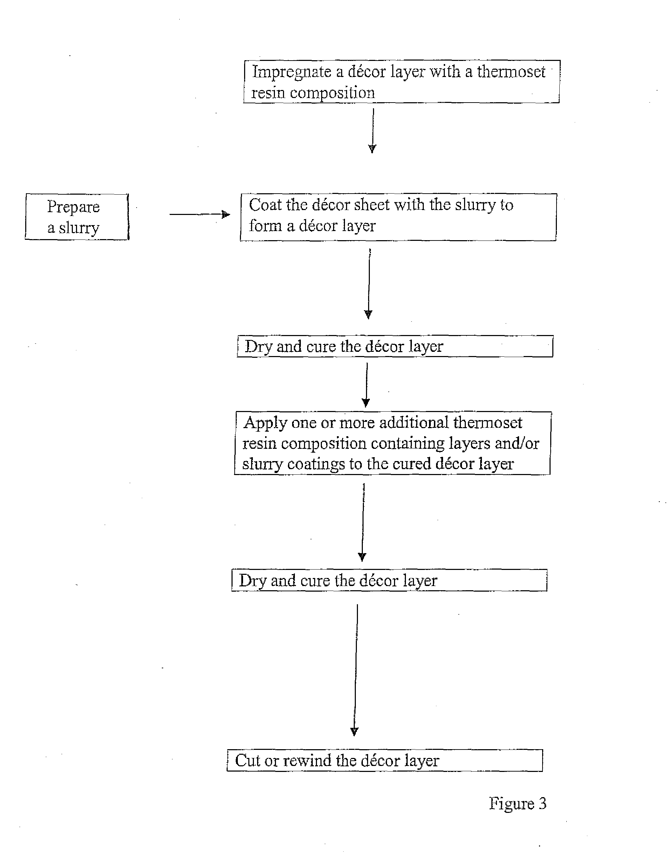

Figure 3 depicts an exemplary method for forming another exemplary décor layer, wherein the method of Figure 3 is identical to that disclosed in Figure 1, but also comprises applying one or more additional thermoset resin composition containing layers and/or layers of slurry to the cured décor layer formed according to the process set forth in Figure 1, wherein the additional thermoset resin composition containing layers and/or additional slurry layers may comprise the same or different thermoset resin composition(s) and/or layers of slurry used to form the uncured décor layer. That is, after the initial décor layer is dried and cured, and prior to cutting, one or more additional thermoset resin composition containing layers and/or slurry coat(s) may be added to the cured décor layer. The resulting décor composite, now comprising the additional thermoset resin composition containing layer(s) and/or slurry coat(s), may then again be dried and cured. The resulting final cured décor composite may then be cut or rewound for use as a surface layer in the formation of a laminate. It is contemplated that one or more of the additional thermoset resin composition containing layers may be applied to any one of the slurry coating, the décor layer, or to a prior placed additional thermoset resin composition containing layer and/or additional layer of slurry. Additionally, in a particularly preferred embodiment, the additional layer of slurry is preferably applied to at least one of the initial layer of slurry, i.e., the layer of slurry that is coated directly onto the impregnated décor sheet, another additional layer of slurry, or to an additional thermoset resin composition containing layer, wherein such positioning of the additional layer of slurry is preferably indirectly positioned on the same side of the décor layer as the initial layer of slurry, i.e., the additional layer of slurry preferably will not be sandwiched between the décor layer and the core layer when the laminate is formed.

An exemplary method of forming the décor layer comprising one or more additional thermoset resin layers comprises impregnating a décor sheet with about a 5 to about a 250 gsm coating of a thermoset resin composition, and then coating the impregnated décor sheet with about a 5 to about a 250 gsm coating of slurry. The coated and impregnated décor layer is then dried and cured with sufficient time and temperature (about 80 degrees Celsius to about 200 degrees Celsius) to achieve a volatile content of about 2 percent to about 10 percent (as measured at 165 degrees Celsius for 5 minutes). This drying process forms a cured décor layer. After or partway through the drying process, one or more additional thermoset resin composition layers and/or slurry layers may be added to the décor layer, wherein such additional thermoset resin composition layers and/or slurry layers may be directly added to the dried slurry layer, directly to the décor sheet, and/or directly to an adjacently placed additional resin layer. After the additional layers are added, the décor layer is dried with sufficient time and temperature (about 80 degrees Celsius to about 200 degrees Celsius) to achieve a volatile content of about 2 percent to about 10 percent (as measured at 165 degree Celsius for 5 minutes).

Exemplary décor sheets formed from the process set forth in Figure 3 are depicted in Figures 4-7. Referring to Figure 4, a décor layer 100 comprises a décor sheet 102 impregnated with a thermoset resin composition 104, and coated with a slurry coating 106 comprising abrasion resistant particles 108 and a thermoset resin composition 110 disposed on a top of décor sheet 102. In this embodiment, décor layer 100 further comprises a thermoset resin composition layer 112 disposed on top of slurry coating 106.

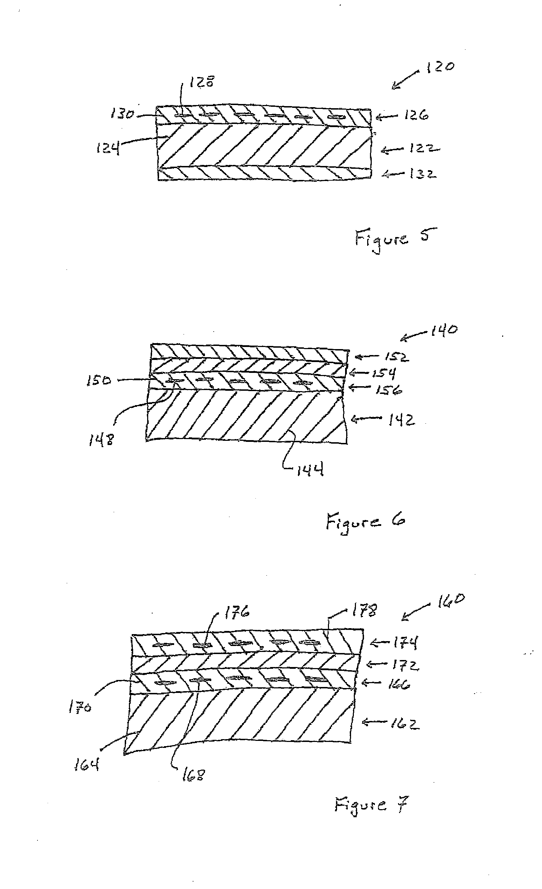

Referring to Figure 5, a décor layer 120 comprises a décor sheet 122 impregnated with a thermoset resin composition 124, and coated with a slurry coating 126 comprising abrasion resistant particles 128 and a thermoset resin composition 130 disposed on top of décor sheet 122. In this embodiment, décor layer 120 further comprises a thermoset resin composition layer 132 disposed on a bottom side of décor sheet 122.

Referring to Figure 6, a décor layer 140 comprises a décor sheet 142 impregnated with a thermoset resin composition 144, and coated with a slurry coating 156 comprising abrasion resistant particles 148 and a thermoset resin composition 150 disposed on top of décor sheet 142. In this embodiment, décor layer 140 further comprises two additional thermoset resin composition layers 152 and 154 stacked on top of slurry coating 156.

Referring to Figure 7, a décor layer 160 comprises a décor sheet 162 impregnated with a thermoset resin composition 164, and coated with a slurry coating 166 comprising abrasion resistant particles 168 and a thermoset resin composition 170 disposed on top of décor sheet 162. In this embodiment, décor layer 160 further comprises a thermoset resin composition layer 172 and a slurry coating 174, wherein slurry coating 174 comprises abrasion resistant particles 176 and a thermoset resin composition 178, wherein abrasion resistant particles 176 and thermoset resin composition 178 may be identical to or different from respective abrasion resistant particles 168 and thermoset resin composition 170.

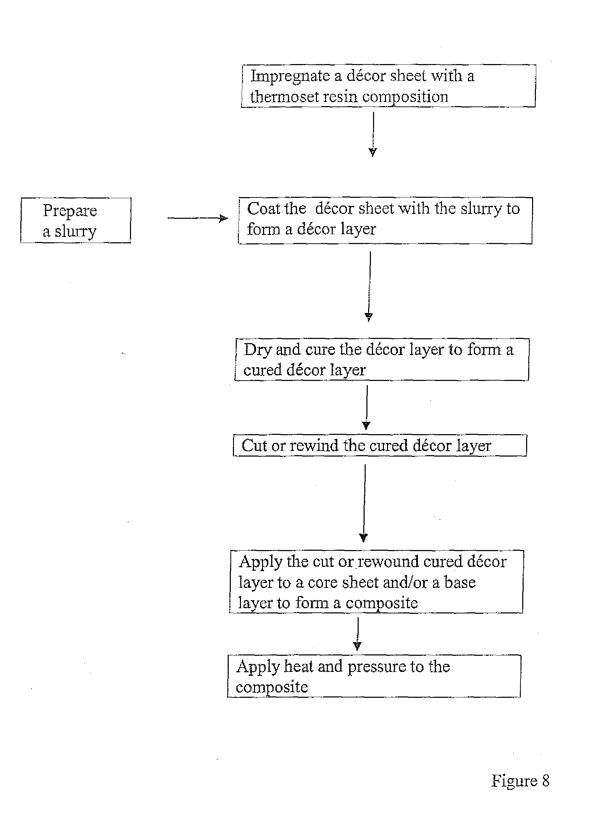

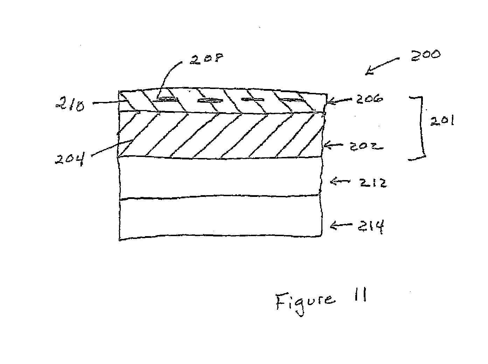

In addition to the production of a novel décor layer, the invention also relates to a process for the production of a decorative thermosetting laminate having an abrasion-resistant surface layer, wherein the surface layer is formed according to the above-described methods. That is, referring to Figure 8, the surface layer formed from either of the methods described above may be pressed under heat of about 200 degrees Fahrenheit to about 500 degrees Fahrenheit, and a pressure of about 100 pounds per square inch to about 1,800 pounds per square inch, with core layer and base layer sheets to create an exemplary decorative laminate 200 as depicted in Figure 11.

Referring to Figure 11, exemplary laminate 200 comprises a surface layer 201 comprising a décor sheet 202 impregnated with a thermoset resin composition 204 and coated with a slurry coating 206 disposed on top thereof. Slurry coating 206 comprises abrasion resistant particles 208 and a thermoset resin composition 210. In addition to surface layer 201, laminate 200 further comprises a core layer 214 and a base layer 212. Exemplary core layer 214 may comprise particleboard or fiberboard. Preferably, laminate 200 is pressed with slurry coating 206 side up to create a protective layer on the surface of laminate 200 which provides wear resistance and superior scuff-, mar-, and scratch- resistance.

Although the present invention has been described with reference to the figures, it is to be understood that the invention is not limited thereto. Rather, the invention shall include all obvious modifications and variations to the present disclosure as would occur to one of ordinary skill in the art. Additionally, it is evident that the process according to the invention is not restricted to laminates made of paper sheets containing melamine-formaldehyde resin, phenol-formaldehyde resin and phenol-urea-formaldehyde resin. Also other thermosetting resins such as polyester resins are possible.

## Claims

1. A decorative laminate comprising:
a décor layer comprising:
a décor composite comprising:
a décor sheet comprising a top side opposite to a bottom side, wherein the décor sheet is impregnated with a first thermoset resin; and
a first coating having a top side opposite to a bottom side, wherein the top side of the first coating is disposed on the top side of the décor sheet, and further wherein the first coating is formed by applying a slurry to the top side of the décor sheet, wherein the slurry comprises a second thermoset resin and a first mix of abrasion resistant particles.

2. The decorative laminate of Claim 1, wherein the first mix of abrasion resistant particles comprises elliptical, platelet shaped abrasion resistant particles.

3. The decorative laminate of Claim 2, wherein the first mix of abrasion resistant particles further comprises crystalline-shaped abrasion resistant particles.

4. The decorative laminate of Claim 3, wherein the first mix of abrasion resistant particles comprises at least about 5 percent of the elliptical, platelet shaped abrasion resistant particles based on the total percentage of abrasion resistant particles in the first mix.

5. The decorative laminate of Claim 2, wherein the first mix of abrasion resistant particles comprises at least one of silica, aluminum oxide, and silicon carbide.

6. The decorative laminate of Claim 2, wherein the elliptical, platelet shaped abrasion resistant particles comprise an average particle size of about 1 micrometer to about 100 micrometers.

7. The decorative laminate of Claim 2, wherein the elliptical, platelet shaped abrasion resistant particles comprise an aspect ratio of about 5:1.

8. The decorative laminate of Claim 2, wherein the slurry comprises about 1 percent to about 50 percent of the abrasion resistant particles.

9. The decorative laminate of Claim 2, wherein the décor sheet comprises about 5 grams per square meter to about 250 grams per square meter of the first thermoset resin.

10. The decorative laminate of Claim 2, wherein the décor layer further comprises one or more additional thermoset resin-containing layers disposed on the décor composite.

11. The decorative laminate of Claim 10, wherein the one or more additional thermoset resin-containing layers are disposed on the décor composite after the décor composite has been dried and cured.

12. The decorative laminate of Claim 11, wherein the one or more additional thermoset resin-containing layers comprises a first thermoset resin layer disposed on a bottom side of the décor sheet.

13. The decorative laminate of Claim 11, wherein the one or more additional thermoset resin-containing layers comprises a first thermoset resin layer disposed on the bottom side of the first coating.

14. The decorative laminate of Claim 13, wherein the one or more additional thermoset resin-containing layers comprises a second coating comprising a third thermoset resin and a second mix of abrasion resistant particles, and further wherein the second coating is disposed on a side of the first thermoset resin layer opposite to the first coating.

15. The decorative laminate of Claim 13, wherein the one or more additional thermoset resin-containing layers further comprises a second thermoset resin layer disposed between the first thermoset resin layer and the bottom side of the first coating.

16. The decorative laminate of Claim 2, further comprising at least one of a base layer and a core layer, wherein the décor layer is bound to the base layer and/or the core layer by applying the décor layer to the base layer and/or the core layer by curing and drying the décor composite and then applying heat and pressure to the décor layer and to the base layer and/or the core layer.

17. A method for the production of a decorative thermoset laminate, comprising:
providing a décor layer, comprising:
providing a décor composite comprising:
impregnating a décor paper sheet having a top side opposite to a bottom side with a first thermoset resin;
applying a first slurry to the top side of the décor paper sheet to form a first coating, wherein the slurry comprises a second thermoset resin and a mix of abrasion resistant particles, wherein the mix of abrasion resistant particles comprises elliptical, platelet shaped abrasion resistant particles and crystalline shaped abrasion resistant particles, and further wherein the slurry is applied to the décor paper sheet such that abrasion resistant particles in the mix are evenly distributed on the décor paper sheet; and
curing and drying the décor composite;
providing a core layer; and
bonding the décor layer to the core layer.

18. The method of Claim 17, wherein the core layer comprises a plurality of prepreg sheets of paper, and wherein bonding the décor layer to the core layer comprises laminating the plurality of prepreg sheets of paper with the décor layer under heat and pressure.

19. The method of Claim 18, wherein one or more of the plurality of prepreg sheets of paper forming the plurality is impregnated with a thermoset resin, wherein the thermoset resin comprises at least one of phenol-formaldehyde resin and phenol-urea-formaldehyde resin.

20. The method of Claim 17, wherein the core layer comprises a plurality of prepreg sheets of paper, and further wherein providing the core layer comprises impregnating a first paper sheet from the plurality of prepreg sheets of paper with a third thermoset resin; and further wherein the bonding the décor layer to the core layer comprises positioning the first paper sheet from the plurality of prepreg sheets as an uppermost sheet in the plurality of prepreg sheets and bonding the décor layer to the first paper sheet.

21. The method of Claim 17, wherein the core layer comprises one or more of particle board or fiber board.

22. The method of Claim 17, wherein the mix of abrasion resistant particles comprises one or more of silica, aluminum oxide and silicon carbide.

23. The method of Claim 17, wherein the elliptical, platelet shaped abrasion resistant particles comprise an average particle size of about 1 micrometer to about 100 micrometers.

24. The method of Claim 17, wherein applying the first slurry comprises:
providing a device comprising:
a container holding the first slurry, and
a rotating roll having an uneven surface positioned under the container; dropping the first slurry from the container onto the rotating roll; and continuously feeding the décor paper sheet on the rotating roll; and distributing the first slurry onto the décor paper sheet.

25. The method of Claim 24, wherein the device further comprises a scraper plate positioned under the container, and wherein distributing the first slurry is accomplished by passing the first slurry under the scraper plate.

26. The method of Claim 17, wherein applying the first slurry comprises spraying or electrostatically coating the décor paper sheet.

27. The method of Claim 17, wherein providing a décor layer comprises charging the abrasion resistant particles by friction prior to applying the first slurry to the décor paper sheet.
